## Europäisches Patentamt
## European Patent Office
## Office européen des brevets

(11) Veröffentlichungsnummer: **0 080 199**
**B1**

(12) # EUROPÄISCHE PATENTSCHRIFT

(45) Veröffentlichungstag der Patentschrift:
20.03.85

(51) Int. Cl.⁴: **F 26 B 11/06**

(21) Anmeldenummer: 82110769.5

(22) Anmeldetag: **22.11.82**

(54) Einrichtung zum Behandeln körnigen Gutes durch Trocknen, Filmcoaten oder Beschichten.

(30) Priorität: **24.11.81 DE 3146536**

(43) Veröffentlichungstag der Anmeldung:
**01.06.83 Patentblatt 83/22**

(45) Bekanntmachung des Hinweises auf die Patenterteilung:
**20.03.85 Patentblatt 85/12**

(84) Benannte Vertragsstaaten:
**AT BE CH DE FR GB IT LI NL SE**

(56) Entgegenhaltungen:
**DE - A - 2 315 882**
**FR - A - 1 419 969**
**FR - A - 2 053 554**
**FR - A - 2 133 243**
**US - A - 2 854 221**

(73) Patentinhaber: **Hüttlin, Herbert, Lörracher Strasse 14, D-7853 Steinen (DE)**

(72) Erfinder: **Hüttlin, Herbert, Lörracher Strasse 14, D-7853 Steinen (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

ACTORUM AG

## Beschreibung

Die Erfindung betrifft eine Einrichtung zum Behandeln körnigen Gutes durch Trocknen, Filmcoaten oder Beschichten mit

— einer Trommel, die um eine zumindest annähernd waagerechte Drehachse drehbar ist und einen Rumpf sowie beidseits davon je einen Stirnwandabschnitt aufweist,

— Ein- und Auslassleitungen für ein Gas zum Trocknen des Gutes sowie

— einem Tauchkörper, der Ein- und Austrittsöffnungen für das Gas aufweist, an die Ein- und Auslassleitungen angeschlossen ist und innerhalb der Trommel eine Stellung einimmt, in der er in das Gut eintaucht.

Unter körnigem Gut sollen im Zusammenhang mit der Erfindung in erster Linie Granulate sowie Pellets verstanden werden, aber auch kristalline Körper wie sie zur Herstellung von Pellets verwendet werden, u.dgl.

Bei einer bekannten Einrichtung der beschriebenen Gattung (DE-PS Nr. 2315882) hat der Tauchkörper die Form eines Schiffes und ist an seinen dem Schiffsrumpf entsprechenden Flächen mit Eintrittsöffnungen und an seiner dem Schiffsdeck entsprechenden Fläche mit Austrittsöffnungen für das Gas zum Trocknen des Gutes versehen. Wenn die Trommel sich dreht und infolgedessen die Partikel des Gutes unten in Drehrichtung mitgenommen werden und oben zurückströmen, wird diese Gutströmung durch den schiffsförmigen Tauchkörper geteilt und intensiv von Trocknungsgas durchströmt. Diese Durchströmung mit Trocknungsgas erreicht aber nur diejenigen Partikel des Gutes, die sich am Tauchkörper oder in dessen Nähe vorbeibewegen. In einer grösseren Trommel müssen deshalb zwei oder mehrere dieser bekannten Tauchkörper nebeneinander angeordnet werden, aber selbst bei einer solchen Anordnung werden beträchtliche Energiemengen verbraucht, bis das Gut gleichmässig getrocknet ist.

Bei dieser bekannten Einrichtung wird, falls das Gut beschichtet werden soll, im allgemeinen ein flüssiges oder breiiges Medium wie Zuckerlösung od. dgl. im Abstand vor dem schiffsförmigen Tauchkörper auf das Gut aufgesprüht; durch dessen Umwälzung und Trocknung sollen dann gleichmässige Überzüge auf den einzelnen Partikeln des Gutes entstehen. Hierbei lässt sich aber schwer verhindern, dass Teilchen des zugleich zum Befeuchten und zum Beschichten dienenden und demzufolge klebrigen Mediums sich an den Innenwänden der Trommel niederschlagen und dort in Bereichen haften bleiben, die mit der Gutströmung nicht oder kaum in Berührung kommen.

Der Erfindung liegt deshalb die Aufgabe zugrunde, eine Einrichtung der eingangs beschriebenen Gattung derart weiterzubilden, dass das Gas zum Trocknen und gegebenenfalls das Material zum Beschichten des Gutes besser ausgenutzt und dabei die Gefahr einer Verschmutzung der Trommel vermindert wird.

Die Aufgabe ist erfindungsgemäss dadurch gelöst, dass der Tauchkörper ein vom Gut durchströmbarer Tunnel ist, in dessen Innerem zumindest ein Teil der Ein- und Austrittsöffnungen für das Gas angeordnet ist.

Damit wird erreicht, dass das Gut nicht wie bisher am Tauchkörper vorbei, sondern durch ihn hindurchfliesst und in dessen Innerem vom Trocknungsgas durchströmt wird. Dadurch wird die im Trocknungsgas enthaltene Energie noch besser ausgenutzt als dies bisher möglich war. Stoffe, mit denen das Gut gegebenenfalls befeuchtet und/ oder beschichtet wird, werden in die Strömung des Gutes hineingezogen oder in dieser festgehalten, während das Gut im Inneren des tunnelförmigen Tauchkörpers getrocknet wird; infolgedessen werden die Möglichkeiten für solche Stoffe, sich an der Innenwand der Trommel niederzuschlagen, erheblich vermindert.

Die erfindungsgemässe Gestaltung des Tauchkörpers ist besonders vorteilhaft bei einer Trommel, deren Stirnwandabschnitte sich zumindest annähernd kegelstumpfförmig in den vom Rumpf umschlossenen Raum hineinerstrecken, nach der DE-A Nr. 3130166. Bei dieser Gestaltung der Stirnwandabschnitte rieselt das von der Trommel bei deren Drehung nach oben mitgenommene Gut nicht nur über das darunterliegende Gut herab, sondern auch über die nach innen ragenden Stirnwandabschnitte hinweg, so dass sich die gesamte Strömung des kaskadenartig herabrieselnden Gutes in einem verengten Bereich der Trommel konzentriert und zu einem erheblichen Teil den dort angeordneten Tauchkörper durchströmt.

Bei einer bevorzugten Ausführungsform der Erfindung hat der Tauchkörper an seiner vom Gut angeströmten Vorderseite eine lichte Weite, die 75 bis 95% des kleinsten axialen Abstandes zwischen den Stirnwandabschnitten der Trommel beträgt. Jedenfalls dann, wenn die Trommel nach innen ragende Stirnwandabschnitte aufweist, genügt diese Bemessung der lichten Weite an der Vorderseite des tunnelförmigen Tauchkörpers, um nahezu die gesamte abwärtsgerichtete Gutströmung durch den Tauchkörper hindurchzuleiten. Gleichzeitig lässt sich aber eine Berührung zwischen Trommel und Tauchkörper ohne besondere Vorsicht vermeiden.

Es kann zweckmässig sein, wenn der Tauchkörper an seiner Vorderseite mindestens eine zusätzliche Eintrittsöffnung für das Gas zum Trocknen des Gutes oder für irgendein anderes Gas aufweist, mit dem sich ein harter Anprall des Gutes am Eingang des vom Tauchkörper gebildeten Tunnels vermeiden und/oder das Gut fluidisieren lässt.

Unabhängig davon oder zusätzlich kann der Tauchkörper an seiner Vorderseite eine scharfe Eintrittskante aufweisen, durch welche die Gutströmung möglichst wenig behindert wird.

Vorzugsweise hat der Tauchkörper an seiner Rückseite eine geringere lichte Weite als an seiner Vorderseite. Dadurch lässt sich die Gutströmung im Inneren des tunnelförmigen Tauchkörpers beschleunigen und eine zusätzliche Durchmischung erzielen.

Zweckmässigerweise hat der Tauchkörper in einer die Drehachse der Trommel enthaltenden, zur Strömungsrichtung des Gutes normalen Ebene einen rechteckigen Querschnitt. Ein solcher Tauchkörper lässt sich einerseits leicht herstellen und eignet sich andererseits besonders gut für das Zusammenwirken mit nach innen ragenden Stirnwandabschnitten der Trommel.

Es ist ferner zweckmässig, wenn der Tauchkörper in seinem Inneren einen Zwischenboden aufweist, in dem Eintrittsöffnungen für das Gas ausgebildet sind, und der Tauchkörper in seinem Inneren ferner eine Zwischendecke aufweist, in der Austrittsöffnungen für das Gas ausgebildet sind. Der Tauchkörper könnte aber auch ein einfaches Rohr von rechteckigem oder beispielsweise kreisförmigem Querschnitt sein, in das die Ein- und Auslassleitungen für das Gas zum Trocknen des Gutes in irgendeiner Weise hineingeführt sind.

Bei der erfindungsgemässen Gestaltung des tunnelförmigen Tauchkörpers mit Zwischenboden sind Eintrittsöffnungen für das Gas vorzugsweise in einem hinteren Bereich des Zwischenbodens ausgebildet und ist vor ihnen im Zwischenboden mindestens eine Eintrittsöffnung für Beschichtungsmaterial angeordnet, die an eine gesonderte Leitung für dieses Material angeschlossen ist.

Dabei ist es ferner zweckmässig, wenn vor der mindestens einen Eintrittsöffnung für das Beschichtungsmaterial mindestens eine zusätzliche Eintrittsöffnung oder Düse für ein Medium zum Befeuchten des Gutes in oder vor dem Tauchkörper angeordnet ist. Diese Anordnung ermöglicht es, als Medium für das Befeuchten des Gutes ein wässeriges oder organisches Lösungsmittel ohne eigene klebende Eigenschaften auf den Gutstrom aufzusprühen oder in diesen einzutragen und erst dahinter, etwa im mittleren Bereich des tunnelförmigen Tauchkörpers, das Beschichtungsmaterial in den Gutstrom einzutragen. Auf diese Weise wird die Gefahr einer Verschmutzung der Trommel auch dann so gut wie vollständig ausgeschlossen, wenn das Gut nicht nur getrocknet, sondern mit einem Überzug aus klebrigem Beschichtungsmaterial versehen wird. Ferner wird auch die Möglichkeit, dass der Tauchkörper verschmutzt, äusserst gering gehalten.

Zweckmässigerweise ist die mindestens eine Düse oder sonstige Eintrittsöffnung für das Medium zum Befeuchten des Gutes ebenfalls im Zwischenboden angeordnet.

Die erfindungsgemässe Einrichtung eignet sich unter anderem für verschiedene bekannte Verfahren zum Beschichten oder Filmcoaten, bei denen auf das Gut bei umlaufender Trommel ein Beschichtungsmaterial aufgebracht wird, das anschliessend getrocknet wird. Bei einer erfindungsgemässen Durchführung eines solchen Verfahrens wird das Gut vor dem Eintritt in den tunnelförmigen Tauchkörper oder in dessen vorderem Bereich mit einem nichtklebenden flüssigen oder dampfförmigen Medium befeuchtet und in einem mittleren Bereich des Tauchkörpers wird das Beschichtungsmaterial in Pulverform in das Gut eingetragen. Es hat sich herausgestellt, dass dampfförmige Medien sich besonders rasch an den einzelnen Partikeln des Gutes niederschlagen und diese gleichmässig befeuchten, und dass anschliessend getrennt eingetragenes pulverförmiges, klebendes Beschichtungsmaterial so gut wie ausschliesslich an den befeuchteten Partikeln des Gutes, nicht aber am Tauchkörper oder an der Trommel haften bleibt. Das Gut lässt sich somit in besonders sauberer Weise und nahezu verlustfrei beschichten oder filmcoaten.

Ausführungsbeispiele einer erfindungsgemässen Dragiereinrichtung werden im Folgenden anhand schematischer Zeichnungen näher erläutert. Es zeigen:

Fig. 1 eine Seitenansicht einer erfindungsgemässen Einrichtung, teilweise im senkrechten Schnitt I-I in Fig. 2,

Fig. 2 den wagerechten Schnitt II-II in Fig. 1,

Fig. 3 einen vergrösserten Ausschnitt aus Fig. 1,

Fig. 4 den Schnitt IV-IV in Fig. 3,

Fig. 5 einen der Fig. 3 entsprechenden senkrechten Schnitt einer abgewandelten Ausführungsform, und

Fig. 6 den Schnitt VI-VI in Fig. 5.

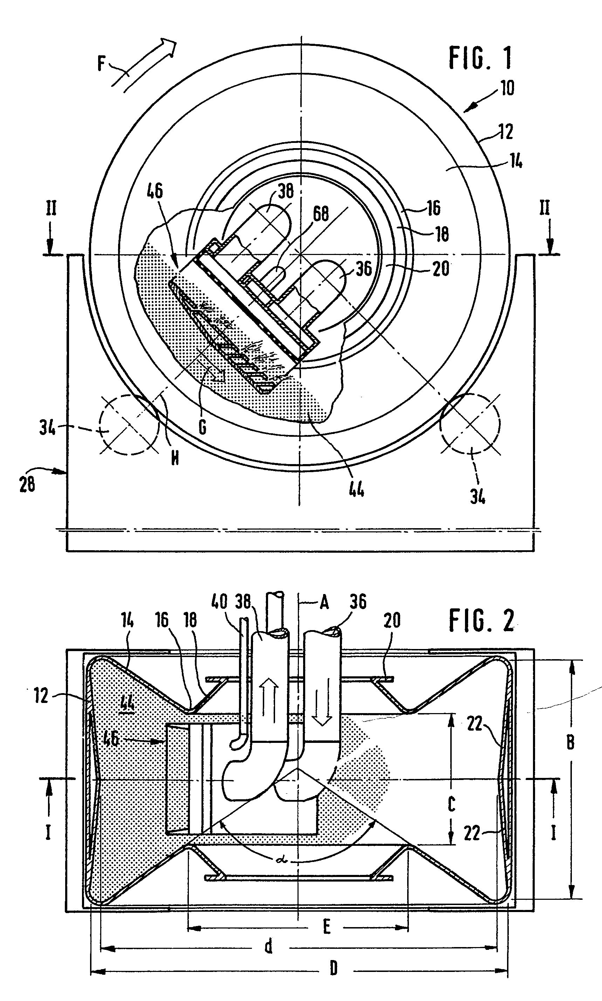

In Fig. 1 und 2 ist eine Trommel 10 dargestellt, die um eine waagerechte Drehachse A drehbar ist und einen Rumpf 12 sowie zwei ringförmige Stirnwandabschnitte 14 aufweist. Der Rumpf 12 hat die lichte Breite B und den grössten inneren Durchmesser D. Die beiden Stirnwandabschnitte 14 enden in je einer zur Drehachse A koaxialen Ringzone 16; diese beiden Ringzonen haben voneinander einen axialen Abstand C, der erheblich kleiner als die lichte Breite B des Rumpfes 12 ist. Gemäss Fig. 2 ist der Abstand C kaum mehr als halb so gross wie die Breite B, und der Durchmesser E der Ringzonen 16 ist etwa halb so gross wie der grösste innere Durchmesser D des Rumpfes 12.

Der Kegelwinkel α der Stirnwandabschnitte 14 beträgt gemäss Fig. 2 etwa 100°. An die beiden Ringzonen 16 schliesst sich je ein Endabschnitt 18 an, der sich kegelstumpfförmig axial nach aussen verjüngt und mit einem Flansch 20 endet.

Der Rumpf 12 hat seinen grössten inneren Durchmesser D im Bereich der Übergänge zu den Stirnwandabschnitten 14 und verengt sich von beiden Seiten her bis zu einem kleinsten Innendurchmesser d in der zur Drehachse A normalen Mittelebene der Trommel 10. Im dargestellten Beispiel beträgt die Durchmesserverminderung etwa 5% von D und wird dadurch erzielt, dass der Rumpf 12 zwei kegelstumpfförmige Rumpfteile 22 aufweist, die sich symmetrisch zur Mittelebene hin verjüngen.

Gemäss Fig. 1 und 2 ist die Trommel 10 auf einem Rollenbock 28 gelagert, der paarweise angeordnete, drehantreibbare Rollen 34 aufweist. Die Rollen 34 sind derart ausgebildet, dass sie die Trommel 10 nicht nur in radialer Richtung abstützen, sondern auch in axialer Richtung führen. Hierzu ist es nicht erforderlich, dass der Rumpf 12 in der üblichen Weise von ringförmigen Schienen umschlossen ist, denn die kegelstumpfförmig nach innen gezogenen Stirnwandabschnitte 14 versteifen den Rumpf 12 an seinen beiden Rändern derart, dass diese die von den Rollen 34 übertragenen Abstützkräfte unmittelbar aufnehmen können.

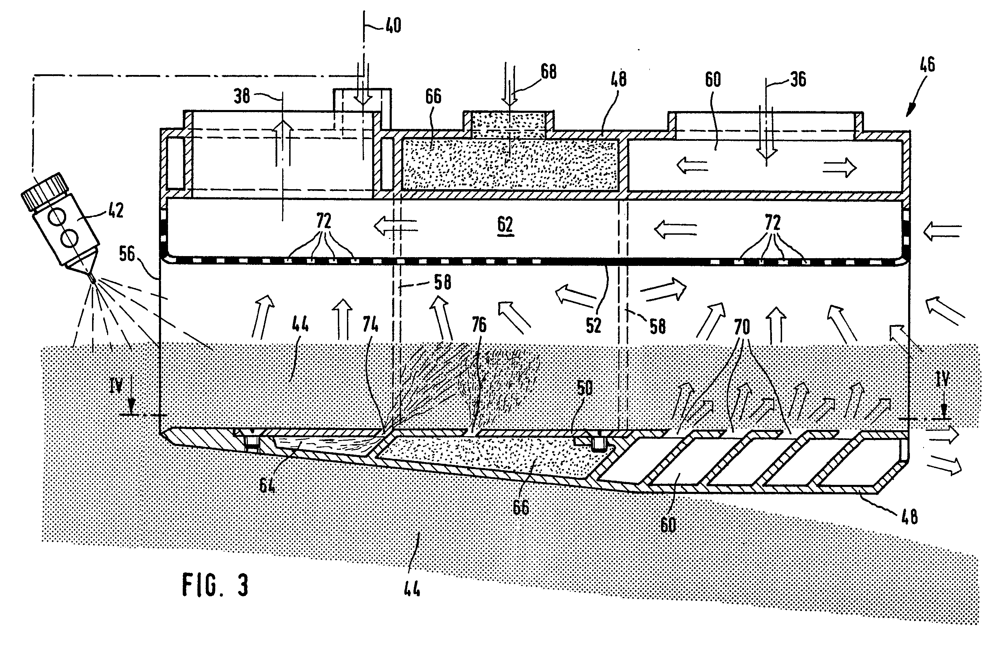

Parallel zur Drehachse A erstrecken sich gemäss Fig. 1 und 2 eine Einlassleitung 36, eine Auslassleitung 38 und eine Leitung 40 für ein Befeuchtungsmedium in die Trommel 10 hinein. Die Leitung 40 endet in mehreren Düsen 42, die in einer zur Drehachse A parallelen Reihe innerhalb der Trommel 10 angeordnet sind. Eine mögliche Anordnung einer solchen Düse 42 ist in Fig. 3 dargestellt. Dabei wird aus der Düse 42 austretendes Befeuchtungsmedium von oben her auf eine obere Schicht eines Gutes 44 gesprüht, während sich die Trommel 10 in Richtung des Pfeils F in Fig. 1 dreht, eine untere Schicht des Gutes 44 in Drehrichtung nach oben mitnimmt und dadurch bewirkt, dass die obere Schicht des Gutes in Richtung des Pfeils G unter einem Winkel von etwa 45° gegen die Waagerechte abwärtsströmt.

In diese abwärtsströmende obere Schicht des Gutes 44 taucht ein tunnelförmiger Tauchkörper 46 ein, dessen Längsrichtung gegen die Waagerechte gemäss Fig. 1 unter dem gleichen Winkel von etwa 45° geneigt ist wie die Oberfläche des herabströmenden Gutes 44. Der Tauchkörper 46 hat eine Aussenwand 48 von der Form einer Hülse, deren Querschnitt in einer die Drehachse A enthaltenden und zur Strömungsrichtung G des Gutes 44 normalen Ebene H rechteckig ist. Der von der Aussenwand 48 umschlossene, im wesentlichen quaderförmige Raum ist durch einen Zwischenboden 50 und eine Zwischendecke 52 unterteilt, die beide in je einer zur Ebene H normalen Ebene zwischen zwei normal zur Drehachse A angeordneten Zwischenwänden 54 liegen.

Die Aussenwand 48 bildet zusammen mit dem Zwischenboden 50 und den beiden Zwischenwänden 54 am Anfang des Tauchkörpers 46, der in Fig. 1 links oben angeordnet ist, eine scharfe Eintrittskante 56. Der Ringraum zwischen der Aussenwand 48 einerseits und dem Zwischenboden 50, der Zwischendecke 52 und den Zwischenwänden 54 andererseits ist durch zwei normal zu diesen Wänden und Böden angeordnete Trennwände 58 in eine ringförmige Einlasskammer 60 für das Trocknungsgas, eine flache Auslasskammer 62 für das Trocknungsgas, eine ringförmige Einlasskammer 64 für ein Befeuchtungsmedium und eine ringförmige Einlasskammer 66 für Beschichtungsmaterial unterteilt. Die beiden Zwischenwände 54 konvergieren in Strömungsrichtung G; der von ihnen begrenzte, vom Gut 44 durchströmbare Innenraum des tunnelförmigen Tauchkörpers 46 verengt sich also in der Strömungsrichtung G.

Der Tauchkörper 46 hat im dargestellten Beispiel an seiner vom Gut 44 durchströmten Eintrittskante 56 eine lichte Weite $W_1$, die ungefähr 85% des Abstandes C zwischen den Ringzonen 16 beträgt. An der Rückseite des Tauchkörpers 46, also dort, wo das Gut 44 aus ihm austritt, hat der Tauchkörper 46 eine lichte Weite $W_2$, die etwa 80% von $W_1$ beträgt. Wegen der zueinander parallelen Anordnung des Zwischenbodens 50 und der Zwischendecke 52 verringert sich der lichte Querschnitt des vom Tauchkörper 46 gebildeten Tunnels somit von vorne nach hinten um etwa 20%, bezogen auf den von der Eintrittskante 56 umgrenzten Eintrittsquerschnitt.

Die Einlasskammer 60 für das Gas zum Trocknen des Gutes 44 ist an die Einlassleitung 36 angeschlossen und die Auslasskammer 62 an die Auslassleitung 38. Die Einlasskammer 64 für das Befeuchtungsmedium kann an die Leitung 40 angeschlossen sein; wenn dies der Fall ist, können die Düsen 42 abgesperrt oder ganz fortgelassen sein. Schliesslich kann die Einlasskammer 66 an eine Leitung 68 für pulverförmiges Beschichtungsmaterial angeschlossen sein.

Der Zwischenboden 50 weist in seinem hinteren Bereich schlitzförmige Eintrittsöffnungen 70 auf, die sich über seine gesamte Breite erstrecken und dem Trocknungsgas den Weg aus der Einlasskammer 60 in den Innenraum des vom Tauchkörper 46 gebildeten Tunnels freigeben. Entsprechende Eintrittsöffnungen können auch in den Zwischenwänden 54 ausgebildet sein. Die Zwischendecke 52 ist auf ihrer gesamten Länge und Breite und auch an der vorderen und hinteren Stirnseite des Tauchkörpers 46 mit Austrittsöffnungen 72 versehen, durch die das Trocknungsgas in die Auslasskammer 62 gelangt.

Im Bereich der ringförmigen Einlasskammer 64, also in seinem vorderen Bereich, weist der Zwischenboden 50 eine sich ebenfalls über seine gesamte Breite erstreckende, schlitzförmige Eintrittsöffnung 74 für das Medium zum Befeuchten des Gutes 44 auf. Schliesslich ist im mittleren Bereich des Zwischenbodens 50 eine ebenfalls schlitzförmig über seine gesamte Breite sich erstreckende Eintrittsöffnung 76 für das Beschichtungsmaterial ausgebildet.

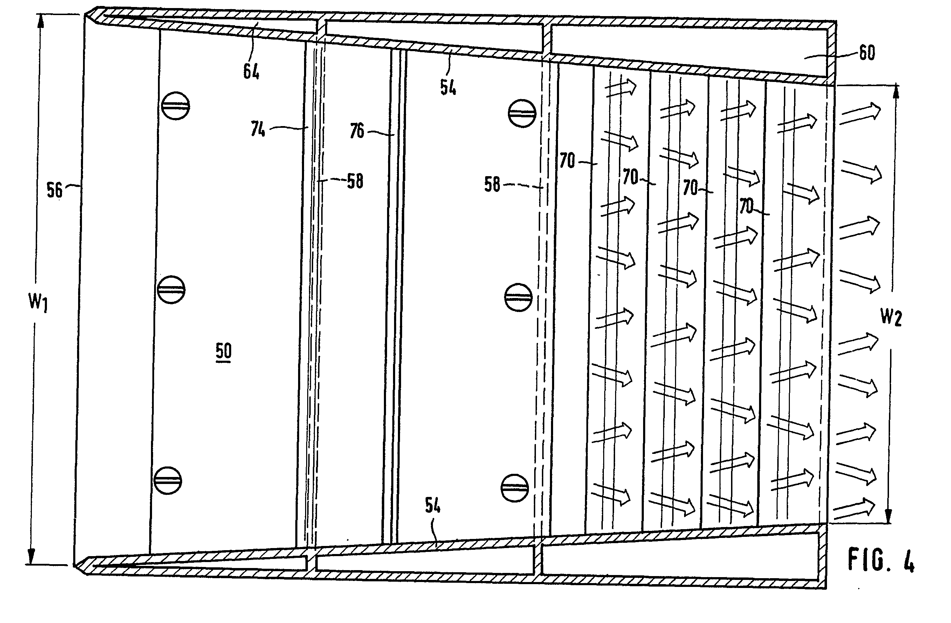

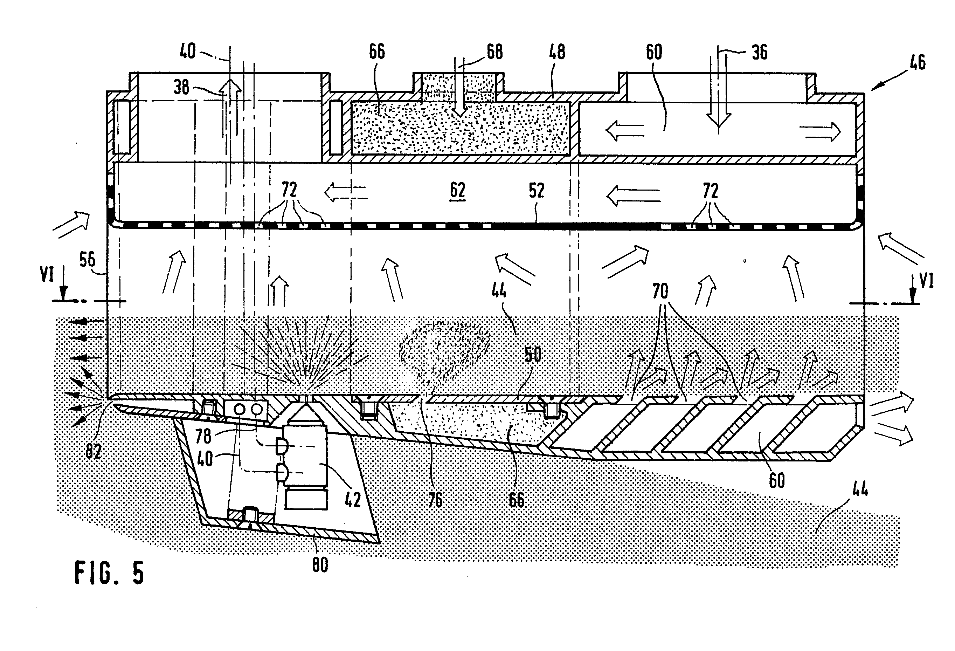

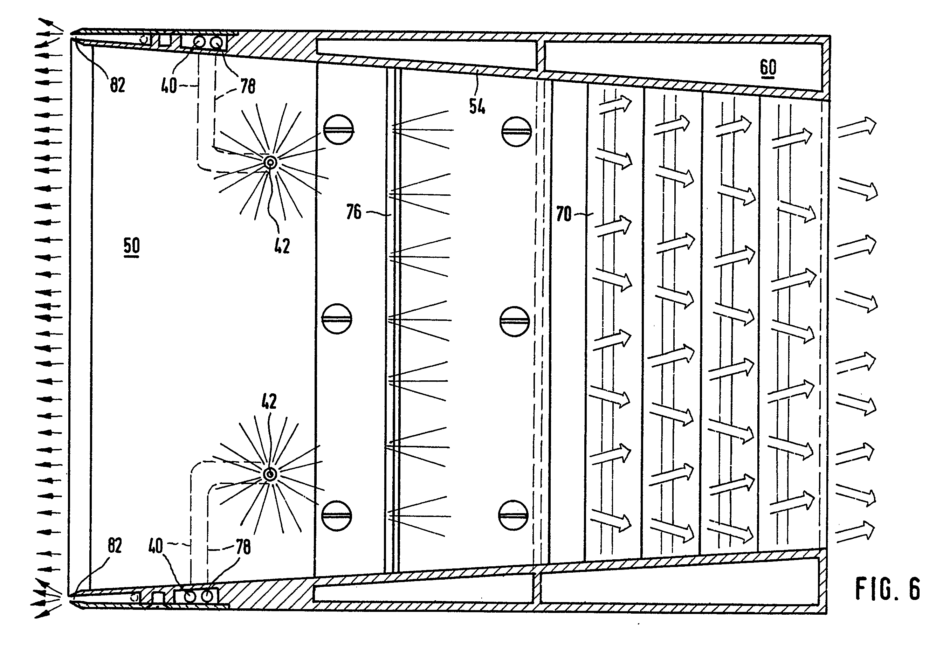

Anstelle der in Fig. 3 und 4 dargestellten schlitzförmigen Eintrittsöffnung 74 für das Medium zum Befeuchten des Gutes 44 können gemäss Fig. 5 und 6 an der Unterseite des Tauchkörpers 46 nach oben gerichtete Düsen 42 angeordnet sein, die der in Fig. 3 dargestellten Düse 42 entsprechen, wie diese als Zweistoffdüsen ausgebildet sein können und in diesem Fall an die Leitung 40 für das Befeuchtungsmedium und zusätzlich an eine Druckgasleitung 78 angeschlossen werden. Gemäss Fig. 5 ist jede der an der Unterseite des Tauchkörpers 46 angeordneten Düsen 42 durch eine ähnlich einem Schiffsbug geformte Verkleidung 80 gegen das unten vorbeiströmende Gut 44 abgeschirmt.

Unabhängig davon, ob und wie ein Befeuchtungsmedium in das Gut 44 eingebracht wird, kann an der Vorderseite des Tauchkörpers 46, insbesondere an dessen scharfer Eintrittskante 56, eine zusätzliche Eintrittsöffnung 82 für Druckgas angeordnet sein. Gemäss Fig. 5 und 6 ist diese zusätzliche Eintrittsöffnung 82 schlitzförmig ausgebildet, erstreckt sich längs der gesamten, in Vorderansicht U-förmigen Eintrittskante 56 und ist an die Einlasskammer 60 für das Gas zum Trocknen des Gutes 44 angeschlossen. Das aus der zusätzlichen Eintrittsöffnung 82 ausströmende Gas hindert das Gut 44, auf die Eintrittskante 56 aufzuprallen und dadurch beschädigt zu werden. Je nach Stärke und Richtung des aus der Eintrittsöffnung 82 austretenden Gasstromes kann dieser das Gut 44 am Eintritt in das Innere des Tauchkörpers 46 fluidisieren und gegebenenfalls kann das Gut 44 während seiner gesamten Bewegung durch den Tauchkörper 46 hindurch einen fluidisierten Zustand beibehalten.

Unabhängig davon, ob eine solche Fluidisierung stattfindet oder nicht, wird der Tauchkörper 46 gemäss Fig. 1, 3 und 5 vorzugsweise nur so weit in das Gut 44 eingetaucht, dass dieses die Zwischendecke 52 normalerweise nicht berührt.

In den dargestellten Beispielen ist als Medium zum Befeuchten des Gutes 44 ein Lösungsmitteldampf vorgesehen, beispielsweise Isopropanol mit einer Verdampfungstemperatur von +79 °C. Dieser Dampf wird durch die Düsen 42 kurz vor dem Tauchkörper 46 auf das Gut 44 aufgesprüht und/oder durch die Eintrittsöffnung 74 im vorderen Bereich des Tunnelinnenraumes von unten her in das Gut 44 eingebracht. Stromabwärts davon wird durch die Eintrittsöffnung 76 pulverförmiges Beschichtungsmaterial, das einen Kleber enthält, von unten her in das Gut 44 eingeblasen, so dass es sich rasch an den zuvor befeuchteten Partikeln des Gutes anlagert. Im letzten Drittel des tunnelförmigen Tauchkörpers 46 wird das Gut 44 von Warmluft getrocknet, die als Trocknungsgas durch die Eintrittsöffnungen 70 in das Gut eingeblasen wird.

## Patentansprüche

1. Einrichtung zum Behandeln körnigen Gutes durch Trocknen, Filmcoaten oder Beschichten mit
— einer Trommel (10), die um eine zumindest annähernd waagerechte Drehachse (A) drehbar ist und einen Rumpf (12) sowie beidseits davon je einen Stirnwandabschnitt (14) aufweist,
— Ein- und Auslassleitungen (36, 38) für ein Gas zum Trocknen des Gutes (44) sowie
— einem Tauchkörper (46), der Ein- und Austrittsöffnungen (70, 72) für das Gas aufweist, an die Ein- und Auslassleitungen 36, 38 angeschlossen ist und innerhalb der Trommel (10) eine Stellung einnimmt, in der er in das Gut (44) eintaucht,
dadurch gekennzeichnet, dass der Tauchkörper (46) ein vom Gut (44) durchströmbarer Tunnel ist, in dessen Innerem zumindest ein Teil der Ein- und Austrittsöffnungen (70, 72) für das Gas angeordnet ist.

2. Einrichtung nach Anspruch 1, dadurch gekennzeichnet, dass der Tauchkörper (46) an seiner vom Gut (44) angeströmten Vorderseite eine lichte Weite ($W_1$) hat, die 75 bis 95% des kleinsten axialen Abstandes (C) zwischen den Stirnwandabschnitten (14) der Trommel (10) beträgt.

3. Einrichtung nach einem der Ansprüche 1 oder 2, dadurch gekennzeichnet, dass der Tauchkörper (46) an seiner Vorderseite mindestens eine zusätzliche Eintrittsöffnung (70) für das Gas aufweist.

4. Einrichtung nach einem der Ansprüche 1 bis 3, dadurch gekennzeichnet, dass der Tauchkörper (46) an seiner Vorderseite eine scharfe Eintrittskante (56) aufweist.

5. Einrichtung nach einem der Ansprüche 1 bis 4, dadurch gekennzeichnet, dass der Tauchkörper (46) an seiner Rückseite eine geringere lichte Weite ($W_2$) als an seiner Vorderseite hat.

6. Einrichtung nach einem der Ansprüche 1 bis 5, dadurch gekennzeichnet, dass der Tauchkörper (46) in einer die Drehachse (A) der Trommel (10) enthaltenden, zur Strömungsrichtung (G) des Gutes (44) normalen Ebene (H) einen rechteckigen Querschnitt hat.

7. Einrichtung nach einem der Ansprüche 1 bis 6, dadurch gekennzeichnet, dass der Tauchkörper (46) in seinem Inneren einen Zwischenboden (50) aufweist, in dem Eintrittsöffnungen (70) für das Gas ausgebildet sind, und der Tauchkörper (46) in seinem Inneren ferner eine Zwischendecke (52) aufweist, in der Austrittsöffnungen (72) für das Gas ausgebildet sind.

8. Einrichtung nach Anspruch 7, dadurch gekennzeichnet, dass Eintrittsöffnungen (70) für das Gas ein einem hinteren Bereich des Zwischenbodens (50) ausgebildet sind und vor ihnen im Zwischenboden (50) mindestens eine Eintrittsöffnung (76) für Beschichtungsmaterial angeordnet ist, die an eine gesonderte Leitung (68) für dieses Material angeschlossen ist.

9. Einrichtung nach Anspruch 8, dadurch gekennzeichnet, dass vor der mindestens einen Eintrittsöffnung (76) für das Beschichtungsmaterial mindestens eine Düse (42) oder sonstige Eintrittsöffnung (74) für das Medium zum Befeuchten des Gutes (44) in oder vor dem Tauchkörper (46) angeordnet ist.

10. Einrichtung nach Anspruch 9, dadurch gekennzeichnet, dass die mindestens eine Düse (42) oder sonstige Eintrittsöffnung (74) für das Medium zum Befeuchten ebenfalls im Zwischenboden (50) angeordnet ist.

11. Einrichtung nach einem der Ansprüche 1 bis 10, dadurch gekennzeichnet, dass die Stirnwandabschnitte (14) der Trommel (10) sich zumindest annähernd kegelstumpfförmig in den vom Rumpf (12) umschlossenen Raum hineinerstrecken.

12. Verfahren zum Behandeln körnigen Gutes mit einer Einrichtung nach einem der Ansprüche 1 bis 11, bei dem auf das Gut (44) bei umlaufender Trommel (10) ein Beschichtungsmaterial aufgebracht wird, das anschliessend getrocknet wird, dadurch gekennzeichnet, dass das Gut (44) vor dem Eintritt in den tunnelförmigen Tauchkörper (46) oder in dessen vorderem Bereich mit einem nichtklebenden flüssigen oder dampfförmigen Medium befeuchtet wird, und dass in einem mittleren Bereich des Tauchkörpers (46) das Beschichtungsmaterial in Pulverform in das Gut (44) eingetragen wird.

## Claims

1. An apparatus for treating granular material by drying, film-coating or coating, comprising
— a drum (10) adapted to be rotated about an at least approximately horizontal rotational axis (A) and having a body portion (12) as well as, at either side thereof, one front wall section (14),
— inlet and outlet conduits (36, 38) for a gas for drying the material (44), and
— an immersion member (46) having inlet and exit openings (70, 72) for the gas, to which the inlet and outlet conduits (36, 38) are connected, and occupying a position inside the drum (10) in which it immerses the material (44), characterized in that the immersion member (46) is a tunnel through which the material (44) can pass, and in the interior of which at least part of the inlet and exit openings (70, 72) for the gas are arranged.

2. The apparatus as defined in Claim 1, characterized in that the immersion member (46) has an internal diameter ($W_1$), at its front side towards which the material (44) flows, that is 75 to 95% of the smallest axial distance (C) between the front wall sections (14) of the drum (10).

3. The apparatus as defined in one of Claims 1 or 2, characterized in that the immersion member (46) has at its front side at least one additional inlet opening (70) for the gas.

4. The apparatus as defined in one of Claims 1 to 3, characterized in that the immersion member (46) has at its front side a sharp inlet edge (56).

5. The apparatus as defined in one of Claims 1 to 4, characterized in that the immersion member (46) has at its rear side a smaller internal diameter ($W_1$) than at its front side.

6. The apparatus as defined in one of Claims 1 to 5, characterized in that the immersion member (46) has a rectangular cross-section in a plane (H) containing the rotational axis (A) of the drum (10) and extending normal to the direction of flow (G) of the material (44).

7. The apparatus as defined in one of Claims 1 to 6, characterized in that the immersion member (46) has in its interior an intermediate bottom (50) in which inlet openings (70) for the gas are formed, and that the immersion member (46) has in its interior furthermore an intermediate ceiling (52) in which exit openings (72) for the gas are formed.

8. The apparatus as defined in Claim 7, characterized in that inlet openings (70) for the gas are formed in a rear region of the intermediate bottom (50) and that in front thereof, in the intermediate bottom (50), there is arranged at least one inlet opening (76) for coating material, said opening (76) being connected to a separate conduit (68) for said material.

9. The apparatus as defined in Claim 8, characterized in that, in front of the at least one inlet opening (76) for the coating material, there is arranged at least one nozzle (42) or other inlet opening (74) for the medium for wetting the material (44) in, or in front of, the immersion member (46).

10. The apparatus as defined in Claim 9, characterized in that the at least one nozzle (42) or other inlet opening (74) for the medium for wetting is also arranged in the intermediate bottom (50).

11. The apparatus as defined in one of Claims 1 to 10, characterized in that the front end sections (14) of the drum (10) extend at least approximately frustoconically into the space enclosed by the body portion (12).

12. A process for treating granular material with an apparatus as defined in one of Claims 1 to 11, in which a coating material is applied onto the material (44) while the drum (10) rotates, said coating material being subsequently dried, characterized in that the material (44), before entering the tunnel-shaped immersion member (46), or in the front region thereof, is wetted with a non-adhesive medium being in liquid or vapor state, and that in a middle region of the immersion member (46) the coating material is supplied in powdery state into the material (44).

**Revendications**

1. Dispositif pour traiter une matière granuleuse par séchage, application d'une couche mince ou enduction, comportant
— un tambour (10) qui peut tourner autour d'un axe de rotation (A) au moins approximativement horizontal et comporte une cuve (12), ainsi que des éléments de paroi frontaux (14) situés des deux côtés de la cuve,
— des conduites (36, 38) d'admission et de sortie d'un gaz utilisé pour le séchage de la matière (44), et
— un corps pouvant être immergé (46) qui comporte des orifices (70, 72) d'admission et de sortie pour le gaz, est raccordé aux conduites d'admission et de sortie (36, 38) et prend à l'intérieur du tambour (10) une position dans laquelle il est immergé dans la matière (44), caractérisé en ce que le corps pouvant être immergé (46) est un tunnel pouvant être traversé par la matière (44), à l'intérieur duquel se trouvent disposés au moins une partie des orifices (70, 72) d'admission et de sortie du gaz.

2. Dispositif selon la revendication 1, caractérisé en ce que le corps pouvant être immergé (46) possède, sur sa face avant, au niveau de laquelle pénètre la matière (44), une largeur intérieure ($W_1$) qui est comprise entre 75 et 95% de la plus faible distance axiale (C) entre les éléments de paroi frontaux (14) du tambour (10).

3. Dispositif selon l'une des revendications 1 ou 2, caractérisé en ce que le corps apte à être immergé (46) possède, sur sa face avant, au moins une ouverture supplémentaire (70) d'admission du gaz.

4. Dispositif selon l'une des revendications 1 à 3, caractérisé en ce que le corps pouvant être immergé (46) comporte, sur sa face avant, un bord d'entrée (56) à arête vive.

5. Dispositif selon l'une des revendications 1 à 4, caractérisé en ce que le corps pouvant être immergé (46) possède une largeur intérieure ($W_2$) plus faible sur sa face arrière que sur sa face avant.

6. Dispositif selon l'une des revendications 1 à 5, caractérisé en ce que le corps pouvant être immergé (46) possède une section transversale rectangulaire dans un plan (H) contenant l'axe de rotation (A) du tambour (10) et perpendiculaire à la direction d'écoulement (G) de la matière (44).

7. Dispositif selon l'une des revendications 1 à 6, caractérisé en ce que le corps pouvant être immergé (46) comporte, en son intérieur, un fond intercalaire (50) dans lequel des orifices (70) d'admission du gaz sont ménagés, et que le corps pouvant être immergé (46) comporte en outre en son intérieur un plafond intercalaire (52) dans lequel sont ménagés des orifices (72) de sortie du gaz.

8. Dispositif selon la revendication 7, caractérisé en ce que des orifices (70) d'admission du gaz sont ménagés dans une partie arrière du fond intercalaire (50) et qu'en avant de ces ouvertures se trouve ménagé, dans le fond intercalaire (50), au moins un orifice (76) d'admission du matériau d'enduction, qui est raccordé à une canalisation particulière (68) prévue pour ce matériau.

9. Dispositif selon la revendication 8, caractérisé en ce qu'au moins une buse (42) ou un autre orifice (74) d'admission du milieu servant à humidifier la matière (44) est disposé en amont dudit au moins un orifice (76) d'admission du matériau d'enduction, dans le corps pouvant être immergé (46) ou en amont de ce dernier.

10. Dispositif selon la revendication 9, caractérisé en ce qu'au moins ladite buse (42) ou l'autre orifice (74) d'admission du milieu d'humidification est également disposé dans le fond intercalaire (50).

11. Dispositif selon l'une des revendications 1 à 10, caractérisé en ce que les éléments de paroi frontaux (14) du tambour (10) s'étendent au moins approximativement en forme de tronc de cône dans l'espace entouré par la cuve (12).

12. Procédé pour traiter une matière granuleuse avec un dispositif selon l'une des revendications 1 à 11, selon lequel, alors que le tambour (10) tourne, un matériau d'enduction, qui est ensuite séché, est appliqué à la matière (44), caractérisé en ce que la matière (44) est humidifiée avant son entrée dans le corps pouvant être immergé (46) en forme de tunnel, ou dans la zone avant de ce dernier, avec un milieu sous forme de liquide non collant ou de vapeur, et que le matériau d'enduction est inséré sous forme pulvérulente dans la matière (44), dans une zone médiane du corps pouvant être immergé (46).

FIG. 1

FIG. 3

FIG. 4

FIG. 5

FIG. 6